# EUROPEAN PATENT SPECIFICATION

(11) **EP 4 470 984 B1**
(45) Date of publication and mention of the grant of the patent: **03.12.2025**
(21) Application number: 23176817.7
(22) Date of filing: 01.06.2023
(51) Int. Cl.: C04B 20/02

(54) **PROCESS OF FORMING AN ARTIFICIAL STONE RECYCLE MATERIAL**
VERFAHREN ZUR HERSTELLUNG EINES KUNSTSTEINRECYCLINGMATERIALS
PROCÉDÉ DE FORMATION D'UN MATÉRIAU DE RECYCLAGE DE PIERRE ARTIFICIELLE

(43) Date of publication of application: 04.12.2024
(73) Proprietor: Vecor IP Holdings Limited, Kowloon, Tsimshatsui (HK)
(72) Inventor: MISA, John Vincent Adap, Pampanga (PH); AGUILAR, Felipe V., Jr., Tarlac (PH)
(74) Representative: Patent Boutique LLP

(56) References cited:
- CN-A- 110 342 846
- CN-A- 111 204 785

## Description

### Field of the invention

The present invention relates to a process for making an artificial stone recycle material from aqueous artificial stone waste material. The artificial stone recycle material has a good colour and is capable of being easily recycled. The process involves ball-milling at a very acidic pH, followed by a calcination step. The process provides an efficient, easy, and more environmentally way to recover useful whitened material from the waste material that can be recycled back into the artificial stone making process.

### Background of the invention

Artificial, also known as engineered, stone material is increasingly used in a variety of architectural and household applications. Typically, such artificial stone material predominantly comprises milled quartz or milled marble, bonded together by a polymer-based resin. This material is typically formed into a slab and other shapes by pressing, cutting, and polishing to form the final articles, such as kitchen worktops.

The cutting and polishing of artificial stone material generates huge amounts of waste material as these slabs are cut and formed into the desired shapes. The waste that is generated by the processing of artificial stone material is especially hard to recycle. Typically, this waste is generated in the form of an aqueous slurry as water is used to cool the cutting and polishing tools. This waste (often referred to as kerf) contains a mixture of stone, and polymer-based resin binder, often in the form of fragments or fibres. There could be a mixture of quartz and marble in the waste material. The waste material is often concentrated, usually by sedimentation or filtering, to form a wet cake. This wet cake is often further dried to reduce its weight, and is then disposed of, typically to landfill.

CN110342846 describes a method for recycling tail mud of artificial quartz stone plate, characterized in that the method is as follows: the artificial quartz stone plate tail mud is dried to a moisture content of less than 3 wt%, and then the dried tail mud is calcined in the rotary kiln cylinder at 650-850 ° C.

CN111204785 describes a method for treatment of aluminum-containing artificial boards, characterized in that the process comprises crushing, grinding, calcining in a rotary kiln, and then the calcined mature material is ground.

The disposal of this waste material is becoming increasingly difficult and expensive, due to the large quantities generated. There is therefore a need to find ways to reduce the quantity of waste material needing disposal. However, recycling this waste material back into the artificial stone production is complicated by the presence of the polymer-based resin, which would cause a variety of problems, once such problem is discolouration. Ideally, the waste generated in an artificial stone material plant should be recycled, for example recycled back into the artificial stone material. Any recycled waste material needs to be sufficiently white such that it can be easily added into a product mix without the problems of causing discolouration. There is a need for a process that can be used to recycle waste kerf from the production of artificial stone material.

### Summary of the invention

The present invention provides a process for making an artificial stone recycle material from aqueous artificial stone waste material, wherein the process comprises the steps of:
(a) obtaining an aqueous artificial stone waste material comprising water, polymer-based resin, and stone;
(b) ball-milling the aqueous artificial stone waste material in the presence of an acid and at a pH of less than 5.0 to form an acidic ball-milled composition; and
(c) calcining the acidic ball-milled composition at a temperature of from 600°C to 1000°C to form the artificial stone recycle material.

### Detailed description of the invention

### Process of forming an artificial stone recycle material.

The process makes an artificial stone recycle material from aqueous artificial stone waste material. The process comprises the steps of:
(a) obtaining an aqueous artificial stone waste material comprising water, polymer-based resin, and stone;
(b) ball-milling the aqueous artificial stone waste material in the presence of an acid and at a pH of less than 5.0 to form an acidic ball-milled composition; and
(c) calcining the acidic ball-milled composition at a temperature of from 600°C to 1000°C to form the artificial stone recycle material.

Typically, the artificial stone waste material is an aqueous material. Typically, some of the water is removed from the aqueous artificial stone waste material prior to step (b). The amount of water removed from the initial aqueous artificial stone waste material can typically be between 30 wt% and 98 wt%. The amounts of water removed will typically be dependent on the solids content of the initial aqueous artificial stone waste material and how it is subsequently handled and this is very dependent on individual plant operations and layout.

### Step (a) obtaining an aqueous artificial stone waste material.

Step (a) obtains an aqueous artificial stone waste material comprising water, polymer-based resin, and stone.

Typically, the initial aqueous artificial stone waste material is generated by the cutting and/or polishing of artificial stone material. Typically, a material of water is directed at the cutting blade and/or polishing tool to control temperature and reduce the generation of dust. This means that the waste material can initially be very dilute, for example less than 5% wt solids. It can be more concentrated, for example > 20% solids, depending on the specific operation generating the waste.

Preferably, some of the water is removed from the aqueous artificial stone waste material prior to step (b). Typically, this water removal step can be carried out by a settling tank, a continuous centrifuge, a filter press, or any combination thereof.

### Step (b) forming an acidic ball-milled composition.

Step (b) ball-mills the aqueous artificial stone waste material in the presence of an acid and at a pH of less than 5.0 to form a treated slurry.

Preferably during step (b), the aqueous artificial stone waste material is ball-milled at a pH of 4.5 or less, or 4.0 or less, or 3.5 or less, or even 3.0 or less.

Preferably, during step (b) the aqueous artificial stone waste material is ball-milled for at least 1.0 hour, or at least 2.0 hours, or at least 3.0 hours, and preferably from 1.0 hour to 10 hours.

Preferably, step (b) is carried out a temperature of below 100°C, preferably from 50°C to below 100°C.

Preferably, step (b) is carried out at a pressure of less than 1.0x10⁶ Pa, preferably from 1.0x10⁵ Pa to 5.0x10⁵ Pa.

Preferably, the acid is contacted with the aqueous artificial stone waste material prior to its introduction into the ball-mill.

A highly preferred process is when some of the water is removed from the aqueous artificial stone waste material prior to step (b), and when the acid is contacted with the aqueous artificial stone waste material after the water removal step and before its introduced into the ball-mill.

Preferably, at least some water is separated from the acidic ball-milled composition prior to step (c). Preferred separation means include centrifugation, filtration, sedimentation, and any combination thereof, preferably centrifugation and/or sedimentation.

Prior to step (c), at least some of the water can be removed from the acidic ball-milled composition by filtration. Preferably, the filtration step filters through a 500µm filter, or a 450µm filter, or a 400µm filter, or a 350µm filter, or a 300µm filter, or a 250µm filter.

Prior to step (c), at least some of the water can be separated from the acidic ball-milled composition by sedimentation, sedimentation includes froth flotation.

Prior to step (c), at least some of the water can be separated from the acidic ball-milled composition by centrifugation.

### Step (c) forming the artificial stone recycle material.

Step (c) calcines the acidic ball-milled composition at a temperature of from 600°C to 1000°C to form the artificial stone recycle material.

A preferred firing temperature is at least 600°C, or at least 650°C, or at least 700°C, or at least 750°C, or at least 800°C, or at least 850°C, or at least 900°C, and preferably from 600°C to 1000°C, from 800°C to 1000°C.

Preferably, the fired material is maintained at the firing temperature (the "soak time") for less than 90 minutes, or less than 70 minutes, or even less than 20 minutes. Short soak times reduce the required energy use.

A suitable firing means is a kiln, preferably a tunnel kiln.

When the composition is fired during step (c), preferably, the ratio of (i) the weight ratio of stone to polymer-based resin in the artificial stone recycle material to (ii) the weight ratio of stone to polymer-based resin in the acidic ball-milled composition prior to firing is greater than 5:1 to 100:1, or from 6:1 to 80:1, and preferably from 20:1 to 50:1.

When the composition is fired, the firing step will remove most of the polymer-based resin from the acidic ball-milled composition. The resultant artificial stone recycle material will comprise very little, if any, residual polymer-based resin.

It is advantageous if the polymer-based resin is removed as easily as possible during step (c), for example, this will minimise energy use. The inventors believe that the acidic ball-milling step (b) pre-treats the material and makes the removal of the polymer-based resin from the stone during step (c) much easier.

### Artificial stone recycle material.

Typically, the artificial stone recycle material comprises quartz and/or marble, preferably quartz.

Preferably, the artificial stone recycle material comprises less than 1.0%, preferably less than 0.7% and most preferably less than 0.5% carbon-based material as measured by Loss on Ignition.

Preferably, the artificial stone recycle material has a whiteness L value of greater than 98.0, or even greater than 98.5.

Preferably, the artificial stone recycle material has a whiteness a value of from -0.3 to +0.3, preferably from -0.2 to +0.2.

Preferably, the artificial stone recycle material has a whiteness b value of from above -2.0 to less than +2.0.

### Aqueous artificial stone waste material.

The aqueous artificial stone waste material comprises water, polymer-based resin, and stone.

The aqueous artificial stone waste material may comprise between 1.0wt% and 90wt% stone.

The aqueous artificial stone waste material is typically initially produced as a low-active slurry and some concentration is usually always required for further handling and wastewater disposal.

Some solid concentration prior to step (b) will very typically happen. The aqueous artificial stone waste material can typically comprise at least 20wt%, or at least 30wt%, or at least 40wt%, or at least 50wt%, or at least 60wt%, or at least 70wt%, or at least 80wt%, or even at least 90wt% stone.

The aqueous artificial stone waste material may comprise a mixture of quartz and marble (typically present as calcite).

### Acidic ball-milled composition.

Typically, the acidic ball-milled composition comprises acid, polymer-based resin, stone, and water.

Preferably, the acidic ball-milled composition from 50wt% to 99wt% water, or from 50wt% to 80wt% water, or from 40wt% to 80wt% water. The composition of the acidic ball-milled composition is calculated after the addition of the acid to the aqueous artificial stone water material after any concentration steps that have happened prior to step (b).

Preferably, the acidic ball-milled composition comprises from 0.5wt% to 20wt%, preferably from 0.8wt% to 18wt%, or from 2.0wt% to 17wt% or from 4.0wt% to 15wt% polymer-based resin.

Preferably, the acidic ball-milled composition comprises from 14wt% to 58wt%, preferably from 20wt% to 50wt%, or from 25wt% to 45wt% stone.

Preferably, the weight ratio of stone to polymer-based resin comprised by the acidic ball-milled composition is in the range of from 1.5:1 to 24:1, preferably in the range of from 7:1 to 12:1.

The acidic ball-milled composition can be subjected to subsequent washing and rinsing steps prior to the calcination step (c). Preferably this is done by contacting the acidic ball-milled composition with additional water, agitating, centrifuging the mix and then decanting off the aqueous layer. The acidic ball-milled composition can be further dried prior to calcination.

### Polymer-based resin.

Any suitable polymer-based resin can be used.

A preferred polymer-based resin is a polyester-based resin.

A preferred polymer-based resin is an unsaturated polyester-based resin.

Preferably, the polymer-based resin is a cross-linked polyester-based resin.

Suitable polyester-based resins include the Distriton range supplied by Polynt.

As used herein, the term: "polyester-based resin" means resins and resin blends that comprise polyester chemistry.

A suitable polymer-based resin is an epoxy polymer based-resin.

The levels of resin present in an artificial stone article can vary depending on the type of product, but typical levels are from 5.0wt% to 30wt%.

### Stone.

Preferably, the stone is predominantly quartz, marble, or a combination thereof, more preferably quartz.

Preferably, the stone is a silica-based stone. A suitable silica-based stone is quartz.

### Acid.

The acid is used in step (b) to ensure the ball-milling step is carried out at the required pH. Any suitable acid can be used. A preferred acid is selected from nitric acid, hydrochloric acid, sulphuric acid, and any combination thereof. A highly preferred acid is nitric acid.

The acid may cause some foaming when it is contacted to the aqueous artificial stone waste material. This is typically due to the presence of any marble in the waste material. Preferably, the aqueous artificial stone waste material is left some time after the addition of the acid before it is ball-milled, this is to allow any foam that may form to subside prior to the ball-milling.

Preferably, the acid is contacted with the aqueous artificial stone waste material prior to its introduction into the ball-mill.

Preferably, the acid is contacted with the aqueous artificial stone waste material after some of the water has been removed from the aqueous artificial stone waste material and before its introduced into the ball-mill.

The concentration of the acid can typically vary between 0.5M and 5 M. Typically the acid has a concentration of 1.0M to 2.0M. Higher acid concentrations can be used if there is already significant water present in the aqueous artificial waste material.

### Ball-mill.

Any suitable ball-mill can be used. A preferred ball-mill is a rod-mill. Another preferred ball-mill is a bead-mill. A highly preferred ball-mill is a planetary ball-mill. Preferably ceramic (alumina) grinding balls are used in the mill, but metal grinding balls can also be used.

Suitable equipment includes the MITR model YXQM-8L Lab planetary ball mill. Suitable grinding balls include alumina balls having a density of ~3.95 g/ml.

### Method of measuring the Loss on Ignition - LOI

The level of carbon-containing material, including polymer and calcined polymeric material, in a material is measured by the Loss on Ignition (LOI) test as per ASTM D7348. In this test, 1g of material is first dried at 150°C. The sample is then cooled and accurately weighed. Then the sample is heated in a stepwise manner over a two-hour period to reach 600°C and kept at this temperature for 1 hour. The sample is then cooled and re-weighed. The LOI value is the weight difference in %.

### Method of measuring the CIELAB colour space values L, a, and b

The colour of a material is commonly described by L, a, and b coordinates in CIE colour space. The "L" value refers to the whiteness where a L value of 0 would mean that a material is perfectly black whereas a L value of 100 would mean that a material appears as perfectly white. The "a" value describes colours ranging from green (negative values of a) to red (positive values of a). The "b" scale characterises colours from blue (negative b values) to yellow (positive b values). The L a b values characterises colours within the human perception of light. The calculation of L, a, b values is done according to ASTM standard D2244-21. Suitable equipment for measuring L, a, b values of paints include the UltraScan PRO range from Hunterlab of Reston, VA, operating in compliance with ASTM E308-18.

### Examples

### Example 1 (inventive)

A sample of waste artificial stone powder having a LOI of 16.36% was dispersed in water and sieved through a 250micron sieve. As received, this raw waste material had a L value of 91.2, an "a" value of 0.9 and a "b" value of 5. Wet sieving was advantageous as the large resin fibres tended to block dry sieves.

The sieved stone material was then dried at 100°C.

The dry, sieved material was then mixed with a large excess of 2M hydrochloric acid and allowed to soak overnight for 12 hours. Some initial foaming was observed when the material was first contacted with the acid. The aqueous layer was then decanted off and the sample dried. This "soaked" material had a L value of 93.9, an "a" value of 0.8 and a "b" value of 6.

300g of the acid washed sample were placed in a ball mill container (to fit MITR model YXQM-8L along with 400ml of 2.0M sulfuric acid. About 1250g of alumina grinding balls were also placed in the container. The alumina balls (density 3.95 g/ml) had the following size distribution: 5 mm (50%wt), 10 mm (32%wt), 20 mm (18%wt).

The slurry was then milled at 180rpm for 60min in a planetary ball mill (MITR model YXQM-8L). At the end of the run the slurry was found to be at ~80°C.

After milling, the slurry was centrifuged, and supernatant liquid was poured off. The sample was then washed in water, centrifuged and the wash water poured off. The sample was then dried at 100°C.

This material had a LOI of 20%. This was greater than the original start value showing the benefit of the acidic milling process.

The material was then calcined for at 850°C with a soak time at 850°C of 10 minutes. After calcining, the L, a, b values had changed to 98.7, -0.2 and +1.9 respectively.

### Example 2 (nil-acid comparative)

Example 1 was repeated but water replaced the acid. This example 2 gave products with the following L, a, b values of 96.7, +0.5 and +2.4 respectively.

### Comparison

| | **L** | **a** | **b** |
|---|---|---|---|
| Example 1 | 98.7 | -0.2 | +1.9 |
| Example 2 | 96.7 | +0.5 | +2.4 |

Higher "L" values are whiter, and "a" and "b" values closer to zero have less colour.

The recycled material obtained by inventive example 1 is a much whiter material and has less colour impurity compared to the recycle material obtained by comparative example 2.

## Claims

1. A process for making an artificial stone recycle material from aqueous artificial stone waste material, wherein the process comprises the steps of:
(a) obtaining an aqueous artificial stone waste material comprising water, polymer-based resin, and stone;
(b) ball-milling the aqueous artificial stone waste material in the presence of an acid and at a pH of less than 5.0 to form an acidic ball-milled composition; and
(c) calcining the acidic ball-milled composition at a temperature of from 600°C to 1000°C to form the artificial stone recycle material.

2. A process according to claim 1, wherein during step (b) the aqueous artificial stone waste material is ball-milled at a pH of 3.0 or less.

3. A process according to any preceding claim, wherein the acid used in step (b) is selected from hydrochloric acid, nitric acid, sulphuric acid, and any combination thereof.

4. A process according to any preceding claim, wherein the acid used in step (b) is nitric acid.

5. A process according to any preceding claim, wherein greater than 30% of the water is removed from the aqueous artificial stone waste material prior to step (b).

6. A process according to any preceding claim, wherein the acid is contacted with the aqueous artificial stone waste material prior to its introduction into the ball-mill.

7. A process according to claims 5-6, wherein the acid is contacted with the aqueous artificial stone waste material after the water removal step and before its introduced into the ball-mill.

8. A process according to any preceding claim, wherein during step (b) the aqueous artificial stone waste material is ball-milled for at least 1.0 hour.

9. A process according to any preceding claim, wherein the ball-mill in step (b) is a rod-mill.

10. A process according to any preceding claim, wherein at least some water is separated from the acidic ball-milled composition prior to step (c).

11. A process according to any preceding claim, wherein the stone is a silica-based stone.

12. A process according to any preceding claim, wherein the stone is quartz.

13. A process according to any of claims 1-11, wherein the stone is selected from quartz, marble, and a combination thereof.

14. A process according to any preceding claim, wherein the polymer-based resin is a polyester-based resin.

## Patentansprüche

1. Verfahren zum Fertigen eines Kunststeinrecyclingmaterials aus wässrigem Kunststeinabfallmaterial, wobei das Verfahren die folgenden Schritte umfasst:
(a) Erhalten eines wässrigen Kunststeinabfallmaterials, das Wasser, Harz auf Polymerbasis und Stein umfasst;
(b) Kugelmahlen des wässrigen Kunststeinabfallmaterials in Gegenwart einer Säure und bei einem pH-Wert von weniger als 5,0, um eine saure kugelgemahlene Zusammensetzung herzustellen; und
(c) Kalzinieren der sauren kugelgemahlenen Zusammensetzung bei einer Temperatur von 600 °C bis 1000 °C, um das Kunststeinrecyclingmaterial herzustellen.

2. Verfahren nach Anspruch 1, wobei während Schritt (b) das wässrige Kunststeinabfallmaterial bei einem pH-Wert von 3,0 oder weniger kugelgemahlen wird.

3. Verfahren nach einem vorhergehenden Anspruch, wobei die in Schritt (b) verwendete Säure ausgewählt ist aus Salzsäure, Salpetersäure, Schwefelsäure und einer beliebigen Kombination davon.

4. Verfahren nach einem vorhergehenden Anspruch, wobei die in Schritt (b) verwendete Säure Salpetersäure ist.

5. Verfahren nach einem vorhergehenden Anspruch, wobei mehr als 30 % des Wassers vor Schritt (b) aus dem wässrigen Kunststeinabfallmaterial entfernt wird.

6. Verfahren nach einem vorhergehenden Anspruch, wobei die Säure vor ihrer Einführung in die Kugelmühle mit dem wässrigen Kunststeinabfallmaterial in Kontakt gebracht wird.

7. Verfahren nach den Ansprüchen 5-6, wobei die Säure nach dem Wasserentfernungsschritt und vor ihrem Einführen in die Kugelmühle mit dem wässrigen Kunststeinabfallmaterial in Kontakt gebracht wird.

8. Verfahren nach einem vorhergehenden Anspruch, wobei während Schritt (b) das wässrige Kunststeinabfallmaterial für mindestens 1,0 Stunde kugelgemahlen wird.

9. Verfahren nach einem vorhergehenden Anspruch, wobei die Kugelmühle in Schritt (b) eine Rohrmühle ist.

10. Verfahren nach einem vorhergehenden Anspruch, wobei mindestens etwas Wasser vor Schritt (c) von der sauren kugelgemahlenen Zusammensetzung abgetrennt wird.

11. Verfahren nach einem vorhergehenden Anspruch, wobei der Stein ein Stein auf Siliciumdioxidbasis ist.

12. Verfahren nach einem vorhergehenden Anspruch, wobei der Stein Quarz ist.

13. Verfahren nach einem der Ansprüche 1-11, wobei der Stein ausgewählt ist aus Quarz, Marmor und einer Kombination davon.

14. Verfahren nach einem vorhergehenden Anspruch, wobei das Harz auf Polymerbasis ein Harz auf Polyesterbasis ist.

## Revendications

1. Procédé de fabrication d'un matériau de recyclage de pierre artificielle à partir de déchets aqueux de pierre artificielle, ledit procédé comprenant les étapes suivantes :
(a) l'obtention de déchets aqueux de pierre artificielle comprenant de l'eau, une résine à base de polymère et de la pierre ;
(b) le broyage à boulets des déchets aqueux de pierre artificielle en présence d'un acide et à un pH inférieur à 5,0 pour former une composition acide broyée à boulets ; et
(c) la calcination de la composition acide broyée à boulets à une température de 600 °C à 1000 °C pour former le matériau de recyclage de pierre artificielle.

2. Procédé selon la revendication 1, au cours de ladite étape (b) lesdits déchets aqueux de pierre artificielle étant broyés à boulets à un pH inférieur ou égal à 3,0.

3. Procédé selon l'une quelconque des revendications précédentes, ledit acide utilisé à ladite étape (b) étant choisi parmi l'acide chlorhydrique, l'acide nitrique, l'acide sulfurique et une quelconque combinaison de ceux-ci.

4. Procédé selon l'une quelconque des revendications précédentes, ledit acide utilisé à ladite étape (b) étant l'acide nitrique.

5. Procédé selon l'une quelconque des revendications précédentes, plus de 30 % de l'eau étant éliminée des déchets aqueux de pierre artificielle avant ladite étape (b).

6. Procédé selon l'une quelconque des revendications précédentes, ledit acide étant mis en contact avec lesdits déchets aqueux de pierre artificielle avant son introduction dans ledit broyeur à boulets.

7. Procédé selon les revendications 5 et 6, ledit acide étant mis en contact avec lesdits déchets aqueux de pierre artificielle après ladite étape d'élimination de l'eau et avant son introduction dans ledit broyeur à boulets.

8. Procédé selon l'une quelconque des revendications précédentes, au cours de ladite étape (b) lesdits déchets aqueux de pierre artificielle étant broyés à boulets pendant au moins 1,0 heure.

9. Procédé selon l'une quelconque des revendications précédentes, ledit broyeur à boulets à ladite étape (b) étant un broyeur à barres.

10. Procédé selon l'une quelconque des revendications précédentes, au moins une partie de l'eau étant séparée de ladite composition acide broyée à boulets avant ladite étape (c).

11. Procédé selon l'une quelconque des revendications précédentes, ladite pierre étant de la pierre à base de silice.

12. Procédé selon l'une quelconque des revendications précédentes, ladite pierre étant du quartz.

13. Procédé selon l'une quelconque des revendications 1 à 11, ladite pierre étant choisie parmi le quartz, le marbre et une combinaison de ceux-ci.

14. Procédé selon l'une quelconque des revendications précédentes, ladite résine à base de polymère étant une résine à base de polyester.
